# EUROPÄISCHE PATENTSCHRIFT

(11) **EP 1 434 229 B1**
(45) Veröffentlichungstag und Bekanntmachung des Hinweises auf die Patenterteilung: **14.06.2006**
(21) Anmeldenummer: 02028962.5
(22) Anmeldetag: 24.12.2002
(51) Int. Cl.: G11B 33/04

(54) **Vorrichtung für das Verschliessen einer CD-Hülle**
Device for closing a case for compact disc
Dispositif pour la fermeture d'un boîtier pour disque compact

(43) Veröffentlichungstag der Anmeldung: 30.06.2004
(73) Patentinhaber: Maiworm, Frank, 58809 Neuenrade (DE); Naber, Win, 5145 NK Waalwijk (NL)
(72) Erfinder: Maiworm, Frank, 58809 Neuenrade (DE); Naber, Win, 5145 NK Waalwijk (NL)
(74) Vertreter: Stenger, Watzke & Ring

(56) Entgegenhaltungen:
- US-A- 5 413 219
- US-A- 5 906 274
- US-B1- 6 450 332

## Beschreibung

Die Erfindung betrifft eine Vorrichtung für das Verschließen einer ein Unterteil und ein relativ hierzu verschwenkbar angeordnetes Oberteil aufweisenden CD-Hülle mit einem am Unterteil angeordneten Verriegelungsabschnitt und einem für die Betätigung des Verriegelungsabschnitts vorgesehenen Betätigungsabschnitt sowie einem am Oberteil angeordneten und als Vorsprung einstückig mit dem Oberteil ausgebildeten Verriegelungselement, wobei der Verriegelungsabschnitt und das Verriegelungselement korrespondierend zueinander ausgebildet sind und in Verschlußstellung kraftübertragend ineinandergreifen, wobei der Verriegelungsabschnitt einen ersten Kragen und einen zweiten Kragen aufweist, welche zwei Kragen versetzt zueinander angeordnet sind und in Verschlußstellung der Vorrichtung das Schlußelement zumindest teilweise anliegend umgeben.

CD-Hüllen sind aus dem Stand der Technik an sich wohlbekannt und haben sich im alltäglichen Praxiseinsatz bewährt. Sie dienen der Aufnahme und sicheren Verwahrung einer CD und lassen sich wiederholt öffnen und schließen, um eine CD zu entnehmen bzw. eine CD in die CD-Hülle hineinzugeben. Derartige CD-Hüllen sind beispielsweise aus der US-A-5 906 274, der US-B1-6 450 332 und der US-A-5 413 219 bekannt. Die hier beschriebenen CD-Hüllen verfügen allesamt über einen Verschlußmechanismus, der es erlaubt, das Oberteil der CD-Hülle gegenüber dem Unterteil der CD-Hülle im verschlossenen Zustand der CD-Hülle zu fixieren. Ein unbeabsichtigtes Verschwenken des Oberteils der CD-Hülle gegenüber dem Unterteil der CD-Hülle kann so vermieden werden- Zum Öffnen der CD-Hülle verfügt der Verschlußmechanismus über ein Betätigungselement, beispielsweise in Form eines Druckknopfes, nach dessen Betätigung sich der Verschlußmechanismus öffnet, was ein Verschwenken des Oberteils der CD-Hülle gegenüber dem Unterteil der CD-Hülle ermöglicht.

Herkömmliche CD-Hüllen dienen der Aufnahme nur einer CD, wobei das Unterteil der CD-Hülle über eine CD-Aufnahme verfügt, in welche hinein die CD für eine sichere Aufbewahrung innerhalb der CD-Hülle eingelegt werden kann. Das Oberteil der CD-Hülle ist relativ zum Unterteil verschwenkbar angeordnet und kann nach Art eines Deckels über die in der CD-Aufnahme des Unterteils angeordnete CD zum Verschließen der Hülle verfahren, das heißt verschwenkt werden. Im verschlossenen Zustand der CD-Hülle, wenn also Ober- und Unterteil unter Ausbildung eines Volumenraumes übereinanderliegend angeordnet sind, ist die im Inneren der CD-Hülle von der CD-Aufnahme gehaltene CD sicher vor äußeren Einflüssen, wie beispielsweise mechanischer Krafteinwirkung, geschützt angeordnet. Für ein Herausnehmen der auf diese Weise in der CD-Hülle angeordneten CD ist die CD-Hülle zunächst zu öffnen, wozu das Oberteil relativ gegenüber dem Unterteil verschwenkt wird. Hierdurch wird der im geschlossenen Zustand der CD-Hülle innerhalb der CD-Hülle ausgebildete Volumenraum frei zugänglich und der Verwender kann die CD der im Unterteil angeordneten CD-Aufnahme entnehmen. Bei herkömmlichen CD-Hüllen ist es dabei für ein Öffnen der CD-Hülle erforderlich, mit der einen Hand das Unterteil der CD-Hülle zu ergreifen und festzuhalten, während mit der anderen Hand das Oberteil zu ergreifen und um die gemeinsame Schwenkachse von Ober- und Unterteil zu verschwenken ist. Im Zuge dieser Schwenkbewegung werden Ober- und Unterteil der CD-Hülle relativ zueinander bewegt und es wird in der vorbeschriebenen Weise der von der CD-Hülle im geschlossenen Zustand umgebene Volumenraum freigegeben.

Bekannt sind aus dem Stand der Technik auch solche CD-Hüllen, die nicht nur der Aufnahme einer CD, sondern vielmehr der Aufnahme mehrerer CD's dienen. Derlei CD-Hüllen unterscheiden sich dem Grunde nach jedoch nicht von den vorbeschriebenen CD-Hüllen. Auch sie verfügen über zueinander relativ verschwenkbar angeordnete Unter- bzw. Oberteile, wobei entsprechend der Anzahl der von der CD-Hülle aufzunehmenden CD's entsprechend viele Unter- bzw. Oberteile vorzusehen sind. So ist beispielsweise bei einer gängigen CD-Hülle für die Aufnahme von zwei CD's vorgesehen, daß diese über zwei Oberteile verfügt, die nach Art eines Deckels verschwenkbar an einem Unterteil angeordnet sind, wobei das Unterteil zur Aufnahme der ersten CD auf der Vorderseite mit einer entsprechenden CD-Aufnahme und einem ersten Oberteil und zur Aufnahme der zweiten CD auf seiner Rückseite mit einer entsprechenden CD-Aufnahme und einem zweiten Oberteil versehen ist. Für ein Öffnen der CD-Hülle zur Entnahme der ersten CD ist in der schon vorbeschriebenen Weise das Unterteil mit einer ersten Hand zu ergreifen und festzuhalten. Mit der anderen Hand ist das erste Oberteil, welches im geschlossenen Zustand der CD-Hülle die erste CD abdeckt, zu ergreifen und um die gemeinsame Schwenkachse von Ober- und Unterteil derart zu verschwenken, daß der Zugriff auf die innerhalb der CD-Aufnahme angeordnete erste CD möglich wird. Für eine Entnahme der innerhalb der CD-Hülle angeordneten zweiten CD ist die CD-Hülle zunächst um 180° soweit zu verdrehen, daß der Benutzer der CD-Hülle das auf der Rückseite des Unterteils angeordnete zweite Oberteil für ein Verschwenken desselben gegenüber dem Unterteil sicher ergreifen kann. In gleicher wie in der schon vorbeschriebenen Art und Weise kann dann das zweite Oberteil gegenüber dem Unterteil verfahren werden, um den Zugriff auch auf die zweite CD zu ermöglichen.

Im Stand der Technik existieren eine Reihe weiterer unterschiedlicher Typen von CD-Hüllen. All diesen CD-Hüllen ist jedoch gemein, daß die CD zur sicheren Aufbewahrung innerhalb der CD-Hülle in eine CD-Aufnahme einzubringen ist, die von einem ersten Teil, nämlich dem Unterteil, gehalten wird, und daß ein gegenüber diesem Unterteil relativ verschwenkbar angeordnetes Oberteil nach Art eines Deckels vorgesehen ist, das über die in der CD-Aufnahme angeordnete CD derart geklappt werden kann, daß zwischen Ober- und Unterteil ein die CD sicher umgebender Volumenraum entsteht. Dabei sind im Sinne der Erfindung unter CD-Hülle nicht nur solche Hüllen zu verstehen, die der sicheren Aufnahme von CD's, sondern auch der sicheren Aufnahme von CD-ROM's, DVD's oder dergleichen optischen Aufzeichnungsträger dienen.

Von Nachteil bei den vorbeschriebenen CD-Hüllen ist allerdings der Umstand, daß für ein Verschließen der CD-Hülle Ober- und Unterteil in vorbeschriebener Weise zueinander verschwenkt und ohne jegliche Verriegelungsmaßnahme übereinander angeordnet werden. Infolgedessen kann es schon aufgrund leichter Erschütterungen, wie diese beispielsweise bei einem Transport der CD-Hülle in einer Tasche oder dergleichen auftreten können, zu einem ungewollten Öffnen der CD-Hülle kommen, wodurch in gleichsam ungewollter Weise ein Zugriff auf die durch die CD-Hülle eigentlich zu schützende CD möglich ist. Nachhaltige Beschädigungen der CD, z. B. durch Verkratzungen oder dergleichen, können in nachteiliger Weise die Folge sein. Um diesen Nachteil zu überwinden, sind aus dem Stand der Technik, so zum Beispiel aus der US-A-5 906 274, der US-B1-6 450 332 und der US-A-5 413 219 CD-Hüllen bekannt geworden, die zum Verriegeln des Oberteils der CD-Hülle gegenüber dem Unterteil der CD-Hülle über einen entsprechend ausgebildeten Verschlußmechanismus verfügen.

Bei den vorbekannten CD-Hüllen ist allerdings das zum Teil sehr aufwendige Handling zum Öffnen der CD-Hülle von Nachteil, was in Folge einer ungeschickten Handhabung der CD-Hülle bisweilen auch zur Zerstörung der CD-Hülle führen kann. Für ein Öffnen der CD-Hülle ist es nämlich erforderlich, Ober- bzw. Unterteil gleichsam mit jeweils einer Hand zu ergreifen und anschließend das Oberteil um die von Ober- und Unterteil gemeinsame Schwenkachse gegenüber dem Unterteil zu verschwenken. Bei einer schon nur geringen nicht in Richtung der Schwenkbewegung wirkenden Kraft kann es dabei zu einer Zerstörung des zumeist aus Kunststoff gebildeten Ober- bzw. Unterteils der CD-Hülle kommen, wobei in aller Regel die zur schwenkbaren Anordnung von Ober- und Unterteil am Oberteil ausgebildete Halterung ausbricht. In Folge dieser Zerstörung kann die CD-Hülle nicht mehr einwandfrei verschlossen werden, womit eine sichere Aufbewahrung der CD innerhalb der CD-Hülle nicht mehr gewährleistet ist.

Es ist daher **Aufgabe** der Erfindung, eine Vorrichtung für das Verschließen einer CD-Hülle anzugeben, die bei gleichzeitig einfacher Handhabung zum Schutz der innerhalb der CD-Hülle angeordneten CD vor ungewollten Verschmutzungen ein sicheres Verschließen der CD-Hülle ermöglicht, wobei es angestrebt ist, die CD-Hülle mit nur einer einzigen Hand öffnen zu können.

Zur **Lösung** dieser Aufgabe wird mit der Erfindung vorgeschlagen, daß das Oberteil einen Nocken aufweist, wobei im verschlossenen Zustand der CD-Hülle der erste am Verriegelungsabschnitt angeordnete Kragen mit dem am Oberteil angeordneten Verriegelungselement zusammenwirkt und diesen derart übergreift, daß dieses nach Art einer Hinterschneidung vom ersten Kragen zurückgehalten ist, und der zweite am Verriegelungsabschnitt angeordnete Kragen mit dem am Oberteil angeordneten Nocken zusammenwirkt und sich gegenüber diesem derart abstützt, daß das Oberteil samt Verriegelungselement aus dem Verriegelungsabschnitt infolge des Öffnens herausdrückbar ist, und daß das Oberteil das Unterteil in verschlossenem Zustand der CD-Hülle vollständig überdeckt, wobei das Oberteil für einen Zugriff auf den am Unterteil angeordneten Betätigungsabschnitt eine zum Betätigungsabschnitt korrespondierend ausgebildete Aussparung aufweist.

Die mit einer erfindungsgemäß ausgebildeten Verschlußvorrichtung versehene CD-Hülle weist einen am Unterteil der CD-Hülle angeordneten Verriegelungsabschnitt sowie ein am Oberteil angeordnetes Verriegelungselement auf. In Verschlußstellung der CD-Hülle greifen Verriegelungselement und Verriegelungsabschnitt kraftübertragend derart ineinander ein, daß ein ungewolltes Öffnen der CD-Hülle in vorteilhafter Weise unterbunden ist. Nur wenn dieses Ineinandergreifen, das heißt die Verriegelung zwischen Ober- und Unterteil vom Benutzer gewollt gelöst wird, kann das Oberteil gegenüber dem Unterteil verschwenkt und der Zugriff auf die innerhalb der CD-Hülle angeordnete CD ermöglicht werden. Gegenüber herkömmlichen CD-Hüllen ermöglicht es die erfindungsgemäße Vorrichtung mithin, die innerhalb der CD-Hülle angeordnete CD auch gegenüber einem unbeabsichtigten Öffnen der CD-Hülle, beispielsweise durch Erschütterungen oder dergleichen, sicher innerhalb der CD-Hülle anzuordnen. Für eine Entriegelung, das heißt für ein Öffnen der Verschlußvorrichtung ist erfindungsgemäß ein Betätigungsabschnitt vorgesehen, der vom Benutzer der CD-Hülle auf einfache Weise betätigt werden kann. In Folge dieser Betätigung, die im weiteren noch näher beschrieben werden wird, können Verriegelungsabschnitt und Verriegelungselement voneinander getrennt werden, so daß wie auch bei herkömmlichen CD-Hüllen dann eine Verschwenkung von Oberteil zu Unterteil vorgenommen werden kann, um einen Zugriff auf die innerhalb der CD-Hülle angeordnete CD zu ermöglichen. Dabei werden nach einer Betätigung des Betätigungsabschnitts Verriegelungselement und Verriegelungsabschnitt mit einer durch die Vorrichtung vorbestimmten Kraft voneinander getrennt, so daß es im Unterschied : zu herkömmlichen CD-Hüllen nicht zu einer ungewollten Zerstörung des Oberteils bzw. des Unterteils der CD-Hülle in Folge einer unsachgemäßen Handhabung kommen kann.

Erfindungsgemäß weist der Verriegelungsabschnitt zwei zueinander versetzt angeordnete Kragen auf, die in Verschlußstellung der Vorrichtung am Verschlußelement vorzugsweise anliegen. Diese beiden versetzt zueinander angeordneten Kragen umgreifen das am Oberteil angeordnete Verriegelungselement in Verschlußstellung der Vorrichtung derart, daß eine freie Bewegung des Verriegelungselements und damit auch eine freie Bewegung des Oberteils gegenüber dem Unterteil wirkungsvoll unterbunden ist. Zu diesem Zweck übergreift der eine der Kragen das Verriegelungselement dergestalt, daß das Verriegelungselement in Bezug auf die vom Oberteil und Unterteil ausführbare Schwenkbewegung blockierend und nach Art eines Hinterschnitts am Kragen angeordnet ist. Erst wenn diese Position von Verriegelungselement und Verriegelungsabschnitt durch Betätigung des Betätigungsabschnitts aufgelöst ist, kann das Verriegelungselement und damit das Oberteil der CD-Hülle wieder gegenüber dem Verriegelungsabschnitt verfahren werden.

Erfindungsgemäß weist das Oberteil einen Haltenocken auf, der in Verschlußstellung der Vorrichtung mit dem nicht mit dem Verriegelungselement in Eingriff befindlichen Kragen des Verriegelungsabschnitts zusammenwirkt. Dabei erfüllt der Haltenocken zwei Funktionen. Zum einen ermöglicht er eine präzise Einfädelung des Verriegelungselements in den Verriegelungsabschnitt hinein, zum anderen stützt sich der im Eingriff mit dem Haltenocken befindliche Kragen des Verriegelungsabschnitts beim Öffnen der Verriegelungsvorrichtung, das heißt in Folge einer Betätigung des Betatigungsabschnitts, gegenüber dem Haltenocken derart ab, daß das Oberteil samt Verriegelungselement aus dem Verriegelungsabschnitt in Folge des Öffnens herausgedrückt wird. Somit kann nach einer Betätigung des Betätigungsabschnitts, das heißt einer Entriegelung der Verriegelungsvorrichtung eine einfache Handhabung der CD-Hülle gewährleistet werden, denn ist es für den Anwender lediglich noch erforderlich, den vom Unterteil gelösten Oberteil der CD-Hülle zu ergreifen und für einen Zugang der innerhalb der CD-Hülle angeordneten CD zu verschwenken. Ein solches Verschwenken des Oberteils kann dabei in vorteilhafter Weise auch unter Ausnutzung nur der Gewichtskraft durchgeführt werden, so daß eine mit der erfindungsgemäß ausgestalteten Vorrichtung versehene CD-Hülle mit nur einer einzigen Hand geöffnet werden kann, indem nämlich die CD-Hülle mit einer Hand ergriffen wird, der Betätigungsabschnitt alsdann mit beispielsweise dem Daumen der ergreifenden Hand betätigt und damit das Oberteil vom Unterteil der CD-Hülle entkoppelt wird und anschließend mit einer einfachen Handbewegung aus dem Handgelenk heraus das Oberteil der CD-Hülle unter Einwirkung der Gewichtskraft vom Unterteil der CD-Hülle verschwenkt wird.

Die erfindungsgemäße Vorrichtung ermöglicht in Folge der in Verschlußstellung der CD-Hülle zwischen Verriegelungselement und Verriegelungsabschnitt ausgebildeten Verriegelung ein auch gegenüber äußeren Einflüssen, wie zum Beispiel Erschütterungen oder dergleichen, sicheres Verschließen der CD-Hülle, so daß ein ungewolltes Öffnen der CD-Hülle in vorteilhafter Weise wirkungsvoll unterbunden werden kann. Zudem ermöglicht die erfindungsgemäße Vorrichtung eine einfache Handhabung, denn kann die vorbeschriebene Verriegelung zwischen Ober- und Unterteil der CD-Hülle durch eine einfache Betätigung des Betätigungsabschnitts aufgelöst werden, womit Beschädigungen der CD-Hülle durch eine unsachgemäße Handhabung unterbunden werden können. Zudem ist die Bedienung des Betätigungsabschnitts unter Verwendung nur einer Hand möglich.

Gemäß einem Merkmal der Erfindung ist der Betätigungsabschnitt relativ zum Unterteil bewegbar angeordnet, wobei der Betätigungsabschnitt gegenüber dem Unterteil mittels Zwischenordnung wenigstens eines Federelements vorgespannt ist. Mit dieser Anordnung wird in vorteilhafter Weise sichergestellt, daß eine unbeabsichtigte Betätigung des Betätigungsabschnitts unterbunden ist. Denn kann die Verriegelung zwischen Verriegelungsabschnitt und Verriegelungselement nur dann aufgehoben werden, wenn der Betätigungsabschnitt entgegen der Federvorspannung relativ zum Unterteil verfahren wird. Dies kann beispielsweise durch einfachen Daumendruck seitens des Verwenders der CD-Hülle geschehen, wobei die durch den Daumendruck erzeugte Betätigungskraft der Federvorspannkraft entgegenwirkt und zum Entriegeln der Verschlußvorrichtung eine die Federvorspannkraft übersteigende Größe aufweisen muß. Durch Wahl eines entsprechenden Federelements kann dabei herstellerseitig festgelegt werden, wie groß die seitens des Anwenders mindestens aufzubringende Kraft zu sein hat, um entgegen der Federvorspannung die Verriegelung zwischen Verriegelungsabschnitt und Verriegelungselement aufzulösen. Die hierzu erforderliche Kraft sollte dabei so gewählt werden, daß größere Kraftaufwendungen seitens des Anwenders vermieden werden, andererseits sollte die notwendigerweise erforderliche Betätigungskraft aber auch so groß sein, daß eine Betätigung des Betätigungsabschnitts nicht in ungewollter Weise, beispielsweise durch Erschütterungen oder dergleichen, erfolgen kann.

Gemäß einem weiteren Merkmal der Erfindung ist vorgesehen, daß das Federelement die Form einer Blattfeder aufweist und einstückig mit dem Betätigungsabschnitt ausgebildet ist. Diese Ausgestaltungsform von Federelement und Betätigungsabschnitt ist insbesondere aus Kostengründen von Vorteil, denn können Federelement und Betätigungsabschnitt einstückig beispielsweise aus Kunststoff herstellt sein. Hierzu eignen sich aus dem Stand der Technik bekannte Spritzgußverfahren. Alternativ hierzu kann natürlich auch vorgesehen sein, Federelement und Betätigungsabschnitt separat voneinander auszubilden und als Federelement beispielsweise eine aus Federdraht hergestellte Spiralfeder vorzusehen.

Gemäß einem weiteren Merkmal der Erfindung ist der Verriegelungsabschnitt und der Betätigungsabschnitt einstückig ausgebildet. Auch diese Maßnahme ist insbesondere aus Kostengründen von Vorteil. Denn können auch der Verriegelungsabschnitt und der Betätigungsabschnitt beispielsweise durch Spritzguß einstückig aus Kunststoff hergestellt sein, wodurch insbesondere die Herstellkosten aber auch die späteren Montagekosten positiv beeinflußt und auf ein Minimum reduziert werden können. Gemäß einem besonderen Vorteil der Erfindung können dabei der Verriegelungsabschnitt, der Betätigungsabschnitt und das Federelement aus einem einfach zu handhabenden Kunststoffteil gebildet werden, welches die vorbeschriebenen Funktionen allesamt in sich vereint.

Erfindungsgemäß ist im übrigen vorgesehen, daß das Verriegelungselement integrativer Bestandteil des Oberteils ist. Auch dieses Merkmal dient insbesondere der Kostenreduzierung für die Herstellung, denn ist erfindungsgemäß vorgesehen, das Oberteil als einstückiges Kunststoffteil auszubilden, welches im dem Verriegelungsabschnitt des Unterteils gegenüberliegenden Bereich mit einem korrespondierend zum Verriegelungsabschnitt ausgebildeten Verriegelungselement versehen ist. Auch hierdurch kann eine einfache Handhabung gewährleistet werden, denn ist es anwenderseitig nicht etwa erforderlich, das Verriegelungselement für eine bestimmungsgemäße Ingebrauchnahme der CD-Hülle zunächst am Oberteil zu fixieren oder lagezusichern. Dieses geschieht durch die integrative Ausbildung des Verriegelungselements am Oberteil der CD-Hülle vielmehr bereits schon herstellerseitig. Dabei ist gemäß einem besonderen Vorteil der Erfindung vorgesehen, daß das Verriegelungselement ein am Oberteil ausgebildeter Vorsprung ist. Diese dem Grunde nach einfache Ausgestaltung des Verriegelungselements ermöglicht eine einfache wie auch kostengünstige Herstellung von Verriegelungselement einerseits und Oberteil andererseits.

Weitere Vorteile und Merkmale der Erfindung ergeben sich aus der Beschreibung anhand der nachfolgenden Figuren. Dabei zeigen:
- Fig. 1:: in einer Draufsicht von oben eine CD-Hülle samt erfindungsgemäßer Vorrichtung;
- Fig. 2a:: in dreidimensionaler Ansicht ein Verriegelungsmittel gemäß der Erfindung;
- Fig. 2b:: in einer Draufsicht von oben ein Verriegelungsmittel gemäß der Erfindung;
- Fig. 3:: in einer teilgeschnittenen Seitenansicht das Verriegelungsmittel gemäß der Schnittlinie III-III gemäß Fig. 1 und
- Fig. 4:: in einer vergrößerten Darstellung Ausschnitt X gemäß Fig. 3.

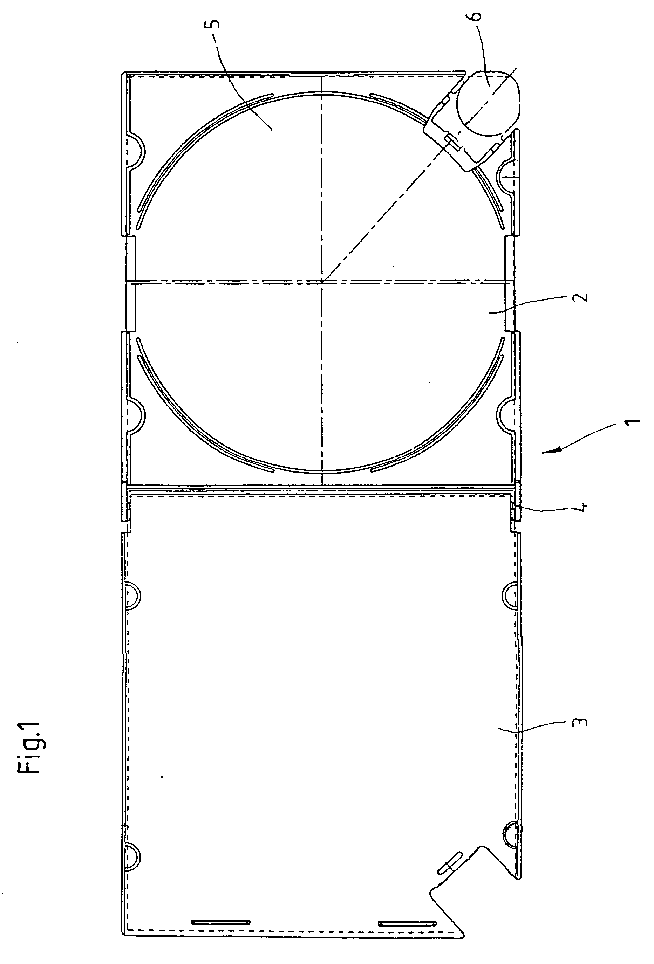

Fig. 1 zeigt in geöffnetem Zustand eine CD-Hülle 1. Diese besteht aus einem Unterteil 2 und einem Oberteil 3, die sich über die gemeinsame Schwenkachse 4 relativ zueinander verschwenken lassen. Das Unterteil 2 verfügt über einen schematisch angedeuteten Bereich 5, der zur Anordnung einer in der Fig. nicht dargestellten CD-Aufnahme dient.

Für ein sicheres Verschließen der CD-Hülle 1 ist ein Verriegelungsmittel 6 vorgesehen, dessen Aufbau und Funktion anhand der nachfolgenden Figuren näher beschrieben werden wird.

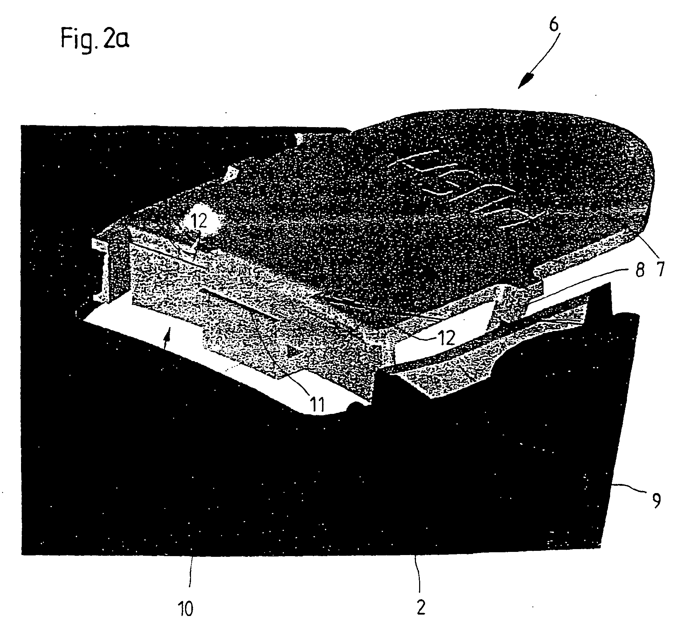

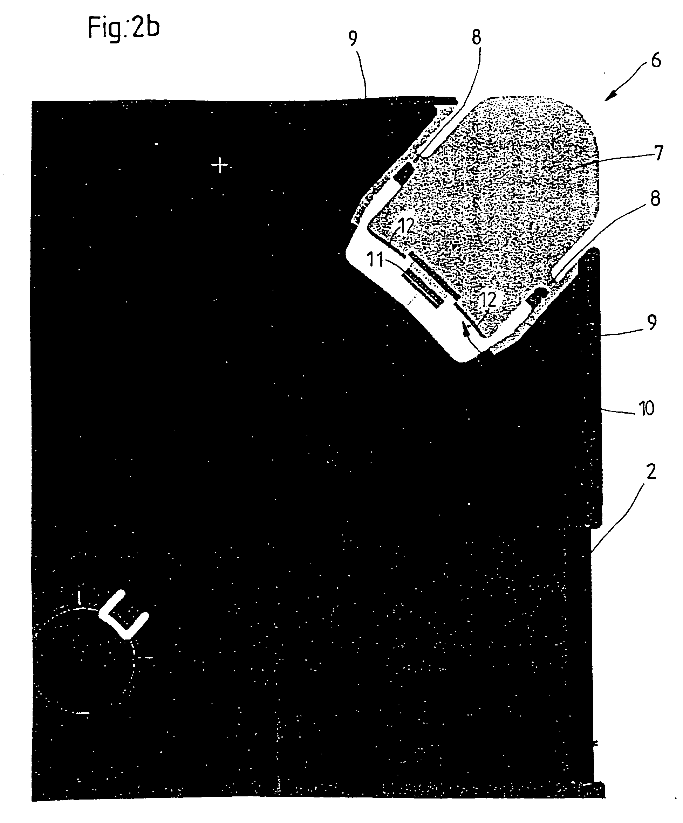

Die Fign. 2a und 2b zeigen das Verriegelungsmittel 6 in vergrößerter Darstellung. Gebildet ist das Verriegelungsmittel 6 aus einem Betätigungsabschnitt 7, zwei als Blattfedern dienenden Federelementen 8, endseitig an den Federelementen 8 jeweils angeordneten Halteeinrichtungen 9 sowie einem Verriegelungsabschnitt 10. Das Verriegelungsmittel 6 ist dabei einstückig ausgebildet und besteht beispielsweise aus Kunststoff. Zur Befestigung des Verriegelungsmittels 6 am Unterteil 2 weist dieses eine entsprechend ausgebildete Aussparung auf, in die hinein das Verriegelungsmittel 6 eingebracht ist. Für eine dauerhafte Anordnung des Verriegelungsmittels 6 am Unterteil 2 dienen die am Verriegelungsmittel 6 vorgesehenen Haltevorrichtungen 9, mit welchen das Verriegelungsmittel 6 kraftübertragend am Unterteil 2 der CD-Hülle 1 angeordnet ist. Dieser Zusammenhang kann insbesondere den Fign. 2a und 2b entnommen werden.

Der Betätigungsabschnitt 7 des Verriegelungsmittels 6 ist über die Federelemente 8 relativ beweglich gegenüber dem Unterteil 2 angeordnet, so daß dieser durch Krafteinwirkung, beispielsweise In Folge einer Betätigung durch Daumendruck, nach unten in Richtung auf das Unterteil 2 bewegt werden kann. Läßt die auf den Betätigungsabschnitt 7 in dieser Weise einwirkende Druckkraft nach, so wird der Betätigungsabschnitt 7 in Folge der Federkraft wieder nach oben in seine in den Fign. 2a und 2b gezeigte Ausgangsposition zurückverfahren.

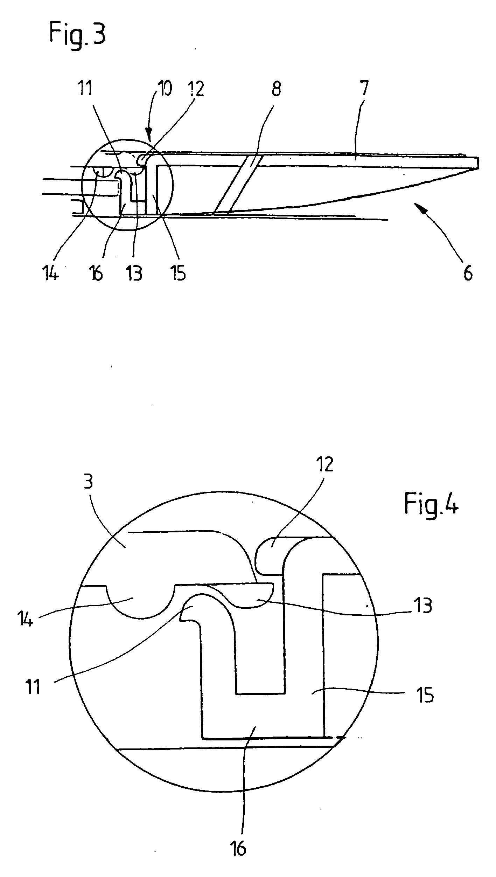

Das Verriegelungsmittel 6 verfügt des weiteren über den schon benannten Verriegelungsabschnitt 10. Dieser umfaßt seinerseits zwei Kragen 11 und 12, die versetzt zueinander angeordnet sind, wobei im Überdeckungsbereich der beiden Kragen 11 und 12 der Kragen 12 eine Unterbrechung aufweist. Für die versetzte Anordnung der Kragen 11 und 12 ist ein im Querschnitt L-förmiger Fortsatz vorgesehen, dessen nach oben gerichtete Langseite den Kragen 11 trägt. Dieser Zusammenhang kann insbesondere den Fign. 3 und 4 entnommen werden.

Zur sicheren Verriegelung der CD-Hülle 1 verfügt das Oberteil 3 über ein integrativ ausgebildetes Verriegelungselement, das gemäß dem Ausführungsbeispiel nach den Fign. als Vorsprung 13 ausgebildet ist. Zu erkennen ist dieser Vorsprung 13 insbesondere in den Fign. 3 und 4.

Im verschlossenen und durch die erfindungsgemäße Vorrichtung gesicherten Zustand der CD-Hülle 1 greifen der Verriegelungsabschnitt 10 des Verriegelungsmittels 6 und der am Oberteil 3 ausgebildete Vorsprung 13 kraftübertragend ineinander, so daß ein ungewolltes Verschwenken des Oberteils 3 gegenüber dem Unterteil 2 der CD-Hülle 1 unterbunden ist. Dieser verriegelte Zustand ist in den Fign. 3 und 4 wiedergegeben, wobei insbesondere Fig. 4 eine vergrößerte Darstellung zeigt.

Wie Fig. 4 zu entnehmen ist, liegen der Kragen 11 und 12 des Verriegelungsabschnitts 10 im verschlossenen Zustand der CD-Hülle 1 am als Vorsprung 13 ausgebildeten Verriegelungselement des Oberteils 3 an. In diesem Zustand übergreift der Kragen 12 den Vorsprung 13 derart, daß dieser nach Art einer Hinterschneidung vom Kragen 12 zurückgehalten und hinsichtlich einer durch Verschwenken des Oberteils 3 nach oben gerichteten Bewegung gehindert wird. Ein ungewolltes Verschwenken des Oberteils 3 gegenüber dem Unterteil 2 ist somit durch den Kragen 12 in wirkunsvoller Weise unterbunden. Der Kragen 11 des Verriegelungsabschnitts 10 ist indes in der verriegelten Stellung der CD-Hülle derart am Vorsprung 13 angeordnet, daß dieser in Kombination mit dem vorgenannten Kragen 12 den Vorsprung 13 umschließt. Auf diese Weise wird sichergestellt, daß sich das Oberteil 3 samt daran angeordnetem Vorsprung 13 nicht in ungewollter Weise gegenüber dem Kragen 12 relativ verschieben kann, was ansonsten zu einer unerwünschten Freigabe des Vorsprungs 13 führen könnte. Die Kragen 11 und 12 sichern den Vorsprung 13 somit in seiner relativen Lage gegenüber dem Kragen 12, welcher zudem gegenüber dem Vorsprung 13 die schon vorbeschriebene Rückhaltefunktion übernimmt.

Für ein Öffnen der CD-Hülle 1 ist der Betätigungsabschnitt 7 entgegen der durch die Federelemente 8 erzeugten Federkraft nach unten in Richtung auf das Unterteil 2 zu bewegen. Verursacht durch diese Bewegung wird die U-förmig ausgebildete Steganordnung 15 und 16 an der offenen Schmalseite, die durch den Vorsprung 13 verschlossen ist, geweitet und der Kragen 12 wird durch eine Verbiegung des Steges 15 in der Fig. leicht nach links bewegt. In Folge dieser Bewegung wird der Vorsprung 13 freigegeben, so daß das Oberteil 3 samt daran angeordnetem Vorsprung 13 am Kragen 12 vorbeigleiten kann. Dies bewirkt alsdann eine Freigabe des als Vorsprung 13 ausgebildeten Verriegelungselements, so daß in dessen Folge das Oberteil 3 gegenüber dem Unterteil 2 zum Öffnen der CD-Hülle 1 verschwenkt werden kann. Als Folge der Aufweitung der zumindest in der Seitenansicht U-förmig ausgebildeten Steganordnung der Stege 15 und 16 drückt der am Steg 16 angeordnete Kragen 11 gegen den an der Unterseite des Oberteils 3 angeordneten Nocken 14 und unterstützt so die zum Zeitpunkt der Entriegelung auf das Oberteil 3 einwirkende Öffnungskraft. Dabei können der Steg 15 und 16 samt der daran angeordneten Kragen 11 und 12 in ihrer geometrischen Ausgestaltung derart aufeinander abgestimmt sein, daß mit Betätigung des Betätigungsabschnitts 7 zunächst die vorbeschriebene Verformung der Stege 15 und 16 dazu führt, daß der Steg 16 und Kragen 11 gegen den am Oberteil 3 angeordneten Nocken 14 drückt und eine wachsende Vorspannkraft erzeugt, bis die Steganordnung 15 und 16 derart verformt ist, daß der Kragen 12 den Vorsprung 13 freigibt. Durch die so über den Steg 16 und den Kragen 11 erzeugte Vorspannung wird mit Freigabe des Vorsprungs 13 durch den Kragen 12 das Oberteil 3 regelrecht aus dem Verriegelungsabschnitt 10 herausgedrückt, was ein "Aufclipsen" der CD-Hülle 1 zur Folge hat.

Um nach einem Öffnen der CD-Hülle 1 diese zu verschließen, ist das Oberteil 3 in bekannter Weise zu verschwenken, wobei für ein Verrasten des Verriegelungsmittels 6 mit leichtem Druck auf das Oberteil 3 im Bereich des als Verriegelungselement dienenden Vorsprungs 13 einzuwirken ist, infolgedessen sich der Vorsprung 13 durch leichtes Weiten der Steganordnung 15, 16 am Kragen 12 vorbeidrückt und in die in den Fign. 3 und 4 genannte Stellung begibt.

### Bezugszeichenliste:

- 1: CD-Hülle
- 2: Unterteil
- 3: Oberteil
- 4: Schwenkachse
- 5: Bereich
- 6: Verriegelungsmittel
- 7: Betätigungsabschnitt
- 8: Federelement
- 9: Halteeinrichtung
- 10: Verriegelungsabschnitt
- 11: Kragen
- 12: Kragen
- 13: Vorsprung
- 14: Nocken
- 15: Steg
- 16: Steg

## Patentansprüche

1. Vorrichtung für das Verschließen einer ein Unterteil (2) und ein relativ hierzu verschwenkbar angeordnetes Oberteil (3) aufweisenden CD-Hülle (1), mit einem am Unterteil (2) angeordneten Verriegelungsabschnitt (10) und einem für die Betätigung des Verriegelungsabschnitts(10) vorgesehen Betätigungsabschnitt (7) sowie einem am Oberteil (3) angeordneten und als Vorsprung (13) einstückig mit dem Oberteil (3) ausgebildeten Verriegelungselement, wobei der Verriegelungsabschnitt (10) und das Verriegelungselement korrespondierend zueinander ausgebildet sind und in Verschlußstellung kraftübertragend ineinandergreifen, wobei der Verriegelungsabschnitt (10) einen ersten Kragen (12) und einen zweiten Kragen (11) aufweist, welche zwei Kragen (11, 12) versetzt zueinander angeordnet sind und in Verschlußstellung der Vorrichtung das Schlußelement zumindest teilweise anliegend umgeben,
**dadurch gekennzeichnet,**
**daß** das Oberteil (3) einen Nocken (14) aufweist, wobei im verschlossenen Zustand der CD-Hülle (1) der erste am Verriegelungsabschnitt (10) angeordnete Kragen (12) mit dem am Oberteil (13) angeordneten Verriegelungselement zusammenwirkt und dieses derart übergreift, daß dieses nach Art einer Hinterschneidung vom ersten Kragen (12) zurückgehalten ist, und der zweite am Verriegelungsabschnitt (10) angeordnete Kragen (11) mit dem am Oberteil (3) angeordneten Nocken (14) zusammenwirkt und sich gegenüber diesem derart abstützt, daß das Oberteil (3) samt Verriegelungselement aus dem Verriegelungsabschnitt (10) infolge des Öffnens herausdrückbar ist, und daß das Oberteil (3) das Unterteil (2) im verschlossenen Zustand der CD-Hülle (1) vollständig überdeckt, wobei das Oberteil (3) für einen Zugriff auf den am Unterteil (2) angeordneten Betätigungsabschnitt (7) eine zum Betätigungsabschnitt (7) korrespondierend ausgebildete Aussparung aufweist.

2. Vorrichtung nach Anspruch 1, **dadurch gekennzeichnet, daß** der Betätigungsabschnitt (7) relativ zum Unterteil (2) bewegbar angeordnet ist, wobei der Betätigungsabschnitt (7) gegenüber dem Unterteil (2) mittels Zwischenordnung wenigstens eines Federelements (8) vorgespannt ist.

3. Vorrichtung nach Anspruch 2, **dadurch gekennzeichnet, daß** das Federelement (8) die Form einer Blattfeder aufweist und einstückig mit dem Betätigungsabschnitt ausgebildet ist.

4. Vorrichtung nach einem der vorhergehenden Ansprüche, **dadurch gekennzeichnet, daß** der Veniegelungsabschnitt (10) und der Betätigungsabschnitt (7) einstückig ausgebildet sind.

5. Vorrichtung nach einem der vorhergehenden Ansprüche, **dadurch gekennzeichnet, daß** der Verriegelungsabschnitt (10), der Betätigungsabschnitt (7) und das Federelement (8) aus Kunststoff bestehen.

## Claims

1. A device for locking a CD case (1) having a lower portion (2) and an upper portion (3) pivotally arranged relative thereto including a locking section (10) arranged on the lower portion (2) and an actuating section (7) provided for the actuation of the locking section (10) and a locking element arranged on the upper portion (2) and formed integrally with the upper portion (3) in the form of a projection (13), the locking section (10) and the locking element being of complementary construction and engaging within one another in a force-transmitting manner in the locked position, the locking section (10) having a first projection (12) and a second projection (11), which two projections (11, 12) are arranged offset from one another and, in the locked position of the device, surround the closure element at least partly in engagement, **characterised in that** the upper portion (3) has a cam (14), whereby, in the closed state of the CD cover (1), the first projection (12) arranged on the locking section (10) cooperates with the locking element arranged on the upper portion (13) and engages over it such that it is retained by the first projection (12) in the manner of an undercut and the second projection (11) arranged on the locking section (10) cooperates with the cam (14) arranged on the upper portion (2) and is supported with respect to it such that the upper portion (3) together with the locking element may be pushed out of the locking section (10) as a consequence of opening and that the upper portion (3) completely covers the lower portion (2) in the closed state of the CD cover (1), whereby the upper portion (3) has a cutout corresponding to the actuating section (7) for access to the actuating section (7) arranged on the lower portion (2).

2. A device as claimed in Claim 1, **characterised in that** the actuating section (7) is movably arranged with respect to the lower portion (2), whereby the actuating section (7) is biased with respect to the lower portion (2) by means of the interposition of at least one spring element (8).

3. A device as claimed in Claim 2, **characterised in that** the spring element (8) has the shape of a leaf spring and is formed integrally with the actuating section.

4. A device as claimed in one of the preceding claims, **characterised in that** the locking section (10) and the actuating section (7) are integral.

5. A device as claimed in one of the preceding claims, **characterised in that** the locking section (10), the actuating section (7) and the spring element (8) consist of plastic material.

## Revendications

1. Dispositif de fermeture d'une jaquette de CD (1) comportant une partie inférieure (2) et une partie supérieure (3) disposée de façon pivotante par rapport à cette dernière, avec une section de verrouillage (10) disposée sur la partie inférieure (2) et une section d'actionnement (7) prévue pour l'actionnement de la section de verrouillage (10), ainsi qu'avec un élément de verrouillage disposé sur la partie supérieure et conçu en tant que saillie (13) en monobloc avec la partie supérieure (3), la section de verrouillage (10) et l'élément de verrouillage étant conçus de façon à se correspondre mutuellement et s'engageant l'un dans l'autre par transmission de force en position de fermeture, la section de verrouillage (10) comportant une première collerette (12) et une deuxième collerette (11), lesdites deux collerettes (11, 12) étant déportées l'une par rapport à l'autre et entourant l'élément de fermeture en s'y appuyant au moins partiellement, en position de fermeture du dispositif,
**caractérisé en ce que**
la partie supérieure (3) comporte un ergot (14), à l'état fermé de la jaquette de CD (1), la première collerette (12) disposée sur la section de verrouillage (10) étant en interaction avec l'élément de verrouillage disposé sur la partie supérieure (13) et recouvrant ce dernier de façon à ce qu'il soit retenu par la première collerette (12) à la façon d'une contre-dépouille et **en ce que** la deuxième collerette (11) disposée sur la section de verrouillage (10) est en interaction avec l'ergot (14) disposé sur la partie supérieure (3) et s'appuie contre ce dernier de façon à ce que, suite à l'ouverture, la partie supérieure (3) avec l'élément de verrouillage puisse être poussée hors de la section de verrouillage (10) et **en ce que** la partie supérieure (3) recouvre entièrement la partie inférieure (2) lorsque la jaquette à CD (1) est fermée, la partie supérieure (3) comportant un évidement conçu en correspondance avec la section d'actionnement (7), permettant l'accès à la section d'actionnement (7) disposée sur la partie inférieure (2).

2. Dispositif selon la revendication 1, **caractérisé en ce que** la section d'actionnement (7) est disposée de façon mobile par rapport à la partie inférieure (2), la section d'actionnement (7) étant précontrainte par rapport à la partie inférieure (2) par intercalage d'au moins un élément à ressort (8).

3. Dispositif selon la revendication 2, **caractérisé en ce que** l'élément à ressort (8) présente la forme d'un ressort à lames et est conçu en monobloc avec la section d'actionnement.

4. Dispositif selon l'une quelconque des revendications précédentes, **caractérisé en ce que** la section de verrouillage (10) et la section d'actionnement (7) sont conçues en monobloc.

5. Dispositif selon l'une quelconque des revendications précédentes, **caractérisé en ce que** la section de verrouillage (10), la section d'actionnement (7) et l'élément à ressort (8) sont en matière plastique.
